# EUROPÄISCHE PATENTSCHRIFT

(11) **EP 2 424 654 B1**
(45) Veröffentlichungstag und Bekanntmachung des Hinweises auf die Patenterteilung: **19.10.2016**
(21) Anmeldenummer: 10710028.1
(22) Anmeldetag: 22.03.2010
(51) Int. Cl.: B01J 13/04, B01J 13/18

(54) **BACTERIORHODOPSIN ENTHALTENDE MIKROKAPSELN UND VERFAHREN ZU DEREN HERSTELLUNG**
BACTERIORHODOPSIN-CONTAINING MICROCAPSULES AND METHOD FOR PRODUCING THE SAME
MICROCAPSULES CONTENANT DE LA BACTÉRIORHODOPSINE ET PROCÉDÉ DE FABRICATION

(30) Priorität: 30.04.2009 CH 684092009
(43) Veröffentlichungstag der Anmeldung: 07.03.2012
(73) Patentinhaber: Actilor Intellectual Asset AG, 7208 Malans (CH)
(72) Erfinder: RITTER, Ulrich, 63667 Nidda-Schwickartshausen (DE); LANGE, Markus, 06231 Bad Dürrenberg (DE); SCHINDLER, Samuel, 74613 Oehringen (DE)
(74) Vertreter: Detken, Andreas
(86) Internationale Anmeldenummer: PCT/EP2010/053673
(87) Internationale Veröffentlichungsnummer: WO 2010/124908

(56) Entgegenhaltungen:
- DE-A1- 19 914 702
- GB-A- 2 196 143
- US-A- 5 807 625

## Beschreibung

### TECHNISCHES GEBIET

Die vorliegende Erfindung betrifft das Gebiet der Verfahren zur Herstellung von Bacteriorhodopsin-Farbkörpern sowie Farbkörper auf dieser Basis und Verwendungen solcher Farbkörper.

### STAND DER TECHNIK

Bacteriorhodopsin und insbesondere Bacteriorhodopsin in seiner üblicherweise vorliegenden Form als zweidimensionale kristalline Patches als Purpurmembran ist ein intensiv untersuchtes System. Das System ist insbesondere deshalb von großem Interesse, weil es als äußerst widerstandsfähiges optisches System in der Lage ist, unterschiedliche optische Zustände einzunehmen, welche interessante Halbwertszeiten aufweisen. So gibt es beispielsweise insbesondere beim Mutanten D96N einen Übergang vom helladaptierten (senfgelben) Zustand in den Dunkelzustand (Violett) mit einer Halbwertszeit von circa 20 s. Diese Halbwertszeit wird durch verschiedene Faktoren der Umgebung beeinflusst, insbesondere durch den in der Umgebung vorliegenden pH-Wert.

Problematisch an diesem System ist unter anderem, dass Bacteriorhodopsin in Purpurmembran durch Umwelteinflüsse leicht denaturiert werden kann, insbesondere wenn es in Kontakt kommt mit gewissen organischen Lösungsmitteln oder Tensiden.

Aus einer kürzlich erfolgten Publikation (vergleiche Soft Matter, 2008, 4, 1249-1254) ist ein Verfahren bekannt, bei welchem Bacteriorhodopsin in der Purpurmembran auf den geladenen Oberflächen mit einer dünnen Schicht aus Wasserglas in einem biomimetischen Prozess beschichtet wird. Dazu wird zunächst in einem ersten Schritt ausschließlich auf der geladenen Oberfläche, das heißt nicht umlaufend, ein Polyelektrolyt (Polyethylenimin) adsorbiert, und anschließend in einem zweiten Schritt auf diesem Polyelektrolyt unter Zuhilfenahme von TEOS eine Wasserglasschicht aufgebaut. Die dabei gebildeten Systeme verfügen entsprechend nicht vollständig umhüllend sondern im wesentlichen nur auf der geladenen Oberfläche über eine Schicht aus Wasserglas. Diese Schicht schützt das Bacteriorhodopsin in der Purpurmembran vor dem schädigenden Einfluss von organischen Lösungsmitteln, das Wasserglas ist aber nicht völlig undurchlässig. Es lässt insbesondere kleine Ionen, insbesondere Protonen und Hydroxid-Ionen, durch. Größere und große Teilchen werden weitgehend ausgeschlossen. Die biomimetische Nanoverkapselung isoliert daher die PM/BR nicht vollständig von der Umgebung. Das Bacteriorhodopsin reagiert also nach wie vor auf Änderungen im pH-Wert der Umgebung. Entsprechend können solche Systeme nur in Situationen eingesetzt werden, wo der pH-Wert der Umgebung auch in einem Bereich gehalten werden kann, wo die gewünschten optischen Eigenschaften des Bacteriorhodopsin vorliegen.

GB 2 196 143 A offenbart ein Aufzeichnungsmedium und ein Verfahren zur Herstellung eines Farbbildes. Das Aufzeichnungsmedium umfasst eine Aufzeichnungsschicht, die in mindestens einem Bereich ein photoempfindliches Protein wie Bacteriorhodopsin und einen Entwickler enthält. Farbe wird entsprechend der Änderung der Wasserstoffionenkonzentration im betreffenden Bereich entwickelt, wobei die Wasserstoffionen durch das belichtete photoempfindliche Protein bereitgestellt werden. US 5,807,625 offenbart eine photochrome Druckfarbe. Ein photochromer Farbstoff ist in ein transparentes Polymer eingebettet. Das Dokument befasst sich nicht mit Proteinen.

### DARSTELLUNG DER ERFINDUNG

Es ist entsprechend eine der Aufgaben der vorliegenden Erfindung, ein verbessertes Verfahren zur Herstellung von Bacteriorhodopsin/Purpurmembran-Fragmenten oder Bacteriorhodopsin/Purpurmembran-Patches zur Verfügung zu stellen, welches die Nachteile des oben genannten Standes der Technik nicht aufweist.

Entsprechend betrifft die vorliegende Erfindung unter anderem ein Verfahren zur Herstellung von optisch schaltbar Bacteriorhodopsin enthaltenden Mikrokapseln mit einem Durchmesser von weniger als 50 µm, bevorzugt weniger als 20 µm, oder weiter bevorzugt weniger als 10 µm, mit einer Umhüllungsschicht, welche das Bacteriorhodopsin vor schädigenden Umwelteinflüssen unter gleichzeitigem Funktionserhalt schützt. Dabei schützt die Umhüllungsschicht nicht nur vor organischen Lösungsmitteln und Tensiden sondern auch gewissermaßen vor dem pH-Wert der Umgebung. Mit anderen Worten liegt in der Mikrokapsel ein definierter pH-Wert vor, welcher durch den pH-Wert der Umgebung der Mikrokapsel im wesentlichen nicht beeinflusst wird. So kann sichergestellt werden, dass unabhängig vom pH-Wert der Umgebung die Mikrokapsel respektive das darin eingeschlossene Bacteriorhodopsin/Purpurmembran-System die gewünschten optischen Eigenschaften aufweist. Die Mikrokapseln können auch als Pigmente oder Farbkörper bezeichnet werden.

Das Verfahren ist dabei insbesondere dadurch gekennzeichnet, dass in einem ersten Schritt Bacteriorhodopsin in Form von Bacteriorhodopsin/Purpurmembran-Patches in einem wässrigen Medium bei einem pH-Wert im Bereich von 6-9 in Anwesenheit eines Wasser zurückhaltenden Polymers suspendiert wird und diese Suspension zu einem Pulver sprühgetrocknet wird oder in einem aliphatischen Lösungsmittel mit niedrigem Dampfdruck und an folgendem Wasserentzug zu einem Pulver getrocknet wird. In diesem ersten Schritt wird gewissermaßen eine Vorläufer-Kapsel erzeugt, in welcher das System Bacteriorhodopsin/Purpurmembran im für dessen optische Aktivität geeignetem pH-Bereich fixiert wird. Diese Vorläuferkapsel verfügt aber typischerweise noch nicht über eine genügend stabile Außenhaut, die Außenhaut kann nach wie vor in Wasser aufgelöst werden. Die Vorläuferkapsel, auch als schaltendes Pulver bezeichnet, weil dieses Pulver bereits stabilisierte optische Eigenschaften von Bacteriorhodopsin aufweist, kann aber bereits getrocknet werden und über längere Zeit stabil gelagert werden.

Entsprechend wird in einem zweiten Schritt das so erhaltene Pulver mit einer für Licht im sichtbaren Bereich im wesentlichen vollständig durchlässigen Ummantelung aus einem Polymer (oder einer Vorstufe davon, Polymer oder Vorstufe bevorzugt in Dispersion im Prozess) und/oder einem langkettigen gesättigten (bevorzugt unverzweigten) Kohlenwasserstoff und/oder einer langkettigen gesättigten (bevorzugt unverzweigten) Fettsäure (einschliesslich Fettsäure-Derivate) versehen. Im Zusammenhang mit langkettigen gesättigten Kohlenwasserstoffen resp. Fettsäuren heisst dabei langkettig, dass (bei einer Mischung im Mittel) wenigstens 15, bevorzugt wenigstens 18, insbesondere bevorzugt wenigstens 25 Kohlenstoffatome vorhanden sind. In Frage kommen zum Beispiel als langkettiger gesättigter Kohlenwasserstoff auch Mischungen wie z.B. Paraffin, vorzugsweise mit einem Erstarrungspunkt von im Bereich von 45 °C-65 °C, und als langkettige gesättigte Fettsäure beispielsweise Ester von aliphatischen unverzweigten C20-bis C30-Säuren mit C30-bis C34-Alkoholen (diese ebenfalls aliphatisch und unverzweigt) wie z.B. ein Carnaubawachs (Cerotinsäuremyricylester, Carnaubasäure, Cerotinsäure und Kohlenwasserstoffe in Mischung), vorzugsweise mit einem Schmelzbereich von 70-90 °C. Entsprechend können folgende Ziele einzeln und/oder in Kombination erreicht werden:
- Durchsichtigkeit des Wandmaterials für sichtbares Licht / mögl. geringe Eigenfarbe
- Entkoppeln von dem Kompartiment in der Kapsel von der Umgebung um die Kapsel
- In der Kapsel Kontrolle der Bedingungen: Gehalt Bacteriorhodopsin (BR); pH; Wassergehalt, Salzgehalt
- Partikelfeinheit kleiner 50µm, oder kleiner als 20 Mikrometer, bevorzugt kleiner 10µm
- Beständigkeit der Kapseln gegenüber 10%iger ethanolischer Lösung über 24h bei 25°C
- Erhalt der Farbwechselfunktionalität bei Lagerung in 10%iger ethanolischer Lösung
- Das Verfahren kann sowohl bei natürlichem Bacteriorhodopsin als auch bei Mutanten eingesetzt werden, insbesondere beim Mutanten D96N.

Das Farbwechsel-Pigment Bacteriorhodopsin kann seine Funktion nur erfüllen, wenn es in bakteriogener Purpurmembran eingebettet ist. Diese Einbettung wird durch schädigende Chemikalien wie Tenside, polare Lösemittel oder andere Inhaltsstoffe, wie sie für Druckfarben typisch sind, zerstört.

Weiterhin ist die Farbwechsel-Funktionalität nur gewährleistet, wenn die Protonenverfügbarkeit bekannt und konstant ist. Dazu müssen sowohl pH als auch der Wassergehalt eingestellt und konstant gehalten werden.

Um einerseits die schädigenden Einflüsse von Außen fern zu halten und andererseits die geeignete Zusammensetzung im Innern zu erhalten wird die vorgeschlagene Einkapselung vorgenommen.

Klassische Verfahren zur Mikroverkapselung, wie sie für Aromen oder pharmazeutische Wirkstoffe Stand der Technik sind, können für das vorliegende Problem nicht zur Anwendung kommen. Bei der Verkapselung von Aromen, Badezusätzen oder anderen ähnlich lipophilen Stoffen gelingt die Verkapselung über Ausnutzung der Lipophilie und eine Emulsions-Polymerisation. Eine wässrige Suspension wie im vorliegenden Fall ist nicht lipophil, eine Emulsion w/w wird so nicht gelingen.

Pharmazeutische Wirkstoffe werden mit Materialien ummantelt, die sich entweder unter vorgegebenen physiologischen Bedingungen auflösen (z.B. Passage des Magens, Auflösung im Darm) oder aber die Materialien sind durchlässig, um eine kontrollierte Wirkstofffreisetzung zu ermöglichen. Weder Auflösen noch Durchtritt von Substanzen können im vorliegenden Fall akzeptiert werden.

Verfahren, wie sie zur Herstellung selbstdurchschreibender Papiere verwendet werden (z.B. US-Pat. 3432327 (1969)) sind nicht geeignet, denn sie zielen auf harte Kugeln ab, die gezielt unter mechanischer Belastung zerplatzen müssen. Auch ein Zerplatzen der Kapseln kann nicht toleriert werden.

Es sind also nur Verfahren zur Einkapselung möglich, welche genau die für die Farbwechselfunktionalität notwendigen Umgebungsbedingungen für das System Bacteriorhodopsin/Purpurmembran gewissermassen einzufrieren respektive einzukapseln erlauben.

Erfindungsgemäß verkapseltes Farbwechsel-Protein findet sich in einer Struktur wie folgt:
In einer kugelförmigen Schale (Außendurchmesser kleiner 50µm, bevorzugt kleiner als 20 oder als 10µm) passender Wandstärke, bestehend aus einem vorzugsweise quervernetzten Polymer wie Polyacrylat oder einem hinreichend langkettigen Polymer wie Paraffin befindet sich ein Kern aus einem wasserzurückhaltenden Polymer wie Gelatine, Polyethylenglykol, Acrylsäure-Natriumacrylat-Copolymer, Polyvinylpyrrolidon, Polyvinylalkohol oder geeigneten Polysaccariden wie Gummiarabicum, derivatisierte Zellulose, Glycogen, Stärke oder derivatisiertes Chitin, ferner Xanthan, Zuckeralkohole, Pektine, Guar, Johannisbrotkernmehl oder Carrageen, Superabsorber oder weiteren, hinreichend wasserzurückhaltenden Polymeren.

In diese(s) wasserzurückhaltende Polymer(e) wird das Farbwechsel-Protein in einer Konzentration typischerweise nicht unter 20 Gew% bei einem geeigneten pH (6-9) eingebettet.

Die Einbettung geschieht bevorzugt durch Sprühtrocknung einer Lösung, die sowohl das Farbwechsel-Protein, ein geeignetes Puffersystem sowie das oder die wasserzurückhaltende(n) Polymer(e) in einer Konzentration kleiner 3 Gew% enthält.

Alternativ kann die Einbettung auch durch Suspension einer wässrigen Lösung des Farbwechsel-Proteins, Puffer-Systems und wasserzurückhaltenden Polymers in einem aliphatischen Lösemittels niedrigen Dampfdrucks und darauffolgenden Wasserentzugs durch geeignete Molekularsiebe wie Zeolithe erfolgen.

Eine weitere Alternative stellt die Einbettung mittels Koazervation durch Gelatine / Gummiarabicum dar.

Derartig verkapseltes Farbwechsel-Protein wird durch einen vorzugsweise quervernetzbaren Kunststoff oder durch eine Paraffin-Schicht oder eine andere Schicht, aus einem Material, wie es oben beschrieben ist, nach außen abgeschlossen. Ein wichtiges Kriterium für die Auswahl eine geeigneten Hüllmaterials kann es dabei sein, dass der Kunststoff, der Fettsäure (resp. das Fettsäurederivat) oder der Kohlenwasserstoff bei den für das gewünschte Pigment-System wichtigen Temperaturen hinreichend über seinem Glasübergangspunkt Tg liegt. Solange zudem die Tg nicht über der Temperatur liegt, bei der das BR denaturiert, und solange das Zusammennfließen der Polymer-Tröpfchen nicht durch inhärente Eigenschaften des Systems gehemmt ist.

Der Einschluß erfolgt nach Ausbildung des Kernes durch
- Suspension des sprühgetrockneten Kernmaterials in einem geeigneten Precursor der quervernetzbaren Kunststoffe wie lichthärtbare oder thermisch härtbare Acrylate
- Suspension des sprühgetrockneten Kernmaterials in einer Schmelze eines Paraffins mit Schmelzpunkt nicht über 75°C
- Einsprühen des sprühgetrockneten Kernmaterials in einen Sprühnebel des vorzugsweise quervernetzbaren Precursors
- Einsprühen des sprühgetrockneten Kernmaterials in einen Sprühnebel eines Paraffins mit Schmelzpunkt nicht über 75°C
- Koazervation des Kernamterials mit Gelatine / Gummiarabicum Erfindungsgemäß eingeschlossenes Farbwechsel-Protein zeigt uneingeschränkte Farbwechsel-Funktionalität auch nach Lagerung über 14 Tage in 10%iger ethanolischer Lösung bei 25°C.

Eine erste bevorzugte Ausführungsform des Verfahrens ist entsprechend dadurch gekennzeichnet, dass im ersten Schritt der pH unter Verwendung eines Puffersystems im Bereich 7.5-9, vorzugsweise im Bereich von 8-8.5, eingestellt wird.

Generell wird vorzugsweise ein Puffersystem um ein System ausgewählt aus der folgenden Gruppe: Phosphatpuffer, TRIS/HCl (TRIS steht für Tris(hydroxymethyl)-aminomethan), Ammoniakpuffer, Kohlensäure/Hydrogencarbonat-Systeme, Diglycin (entspricht Glycylglycin oder Glycylglycin), Bicin (entspricht N,N-Bis(2-hydroxyethyl)glycin), HEPPS (Abkürzung für: 4-(2-Hydroxyethyl)-piperazin-1-propansulfonsäure), HEPES (Abkürzung für: 2-(4-(2-Hydroxyethyl)-1-piperazinyl)-ethansulfonsäure), HEPBS (Abkürzung für: N-(2-Hydroxyethyl)piperazin-N'-(4-butansulfonsäure)), TAPS (Abkürzung für: N-[Tris(hydroxymethyl)methyl]-3-aminopropansulfonsäure oder [(2-Hydroxy-1,1-bis(hydroxymethyl)ethyl)amino]-1-propansulfonsäure), AMPD (oder auch Ammediol; Abkürzung für: 2-Amino-2-rnethyl-1,3-propandiol)) oder eine Kombination davon verwendet.

Hinsichtlich des Puffers wird vorzugsweise darauf geachtet, dass seine totale Konzentration nicht zu hoch ist, da ansonsten die optischen Eigenschaften geschmälert werden können. Entsprechend liegt der Puffer vorzugsweise in einer Konzentration von weniger als 0.03M, insbesondere bevorzugt in einer Konzentration von weniger als 0.02M. Wie bereits erläutert ist einerseits der pH-Wert in der Umgebung des Bacteriorhodopsin wichtig andererseits aber auch der Wassergehalt. Gemäß einer weiteren bevorzugten Ausführungsform wird der Wassergehalt in der Umgebung von Bacteriorhodopsin gezielt gesteuert. Dies kann vorzugsweise dadurch geschehen, dass im ersten Schritt in der Suspension als Hilfsstoff wenigstens ein Feuchthaltemittel beigefügt wird.

Bei diesem Feuchthaltemittel kann es sich um geeignete Kalium-Salze oder um ein Zucker-basiertes Feuchthaltemittel oder Zuckeralkohol-basiertes Feuchthaltemittel handeln. Besonders bevorzugtermassen handelt es sich um eine Mischung aus Kalium-Salzen wie z.B. Pottasche mit einem Zuckeralkohol-basierten Feuchthaltemittel, da derartige Systeme nicht stark zur Kristallisation neigen und die optischen Eigenschaften nicht beeinträchtigen. Insbesondere vorzugsweise handelt es sich um eine Mischung aus Pottasche mit Xylit und/oder Sorbit, besonders bevorzugt im Verhältnis 1:2-2:1 (beispielsweise ungefähr im Verhältnis 1:1).

Eine weitere bevorzugte Ausführungsform ist dadurch gekennzeichnet, dass im ersten Schritt in der Suspension der Gesamtanteil an Bacteriorhodopsin/Purpurmembran, Puffer und Hilfsstoff weniger als 3 Gewichtsprozent ausmacht.

Wie bereits oben erläutert liegt bevorzugtermassen Bacteriorhodopsin in Form von PM/BR-Patches im Wasser zurückhaltenden Polymer in einem Anteil von wenigstens 20 Gewichtsprozent vor.

Generell handelt es sich vorzugsweise beim wasserzurückhaltenden Polymer um ein System ausgewählt aus folgender Gruppe: Gelatine, Polyethylenglykol, Acrylsäure-Natriumacrylat-Copolymer, Polyvinylpyrrolidon, Polyvinylalkohol, Polysaccariden, Zuckeralkoholen, Gummiarabicum, derivatisierte Zellulose, Glycogen, Stärke, derivatisiertes Chitin, Xanthan, Pektine, Guar, Johannisbrotkernmehl, Carrageen, Superabsorber, Zeolithe sowie Kombinationen respektive Mischungen von solchen wasserzurückhaltenden Polymeren. Auch andere Wasser zurückhaltende Polymere sind möglich, solange sie keine negative chemische und/oder optische Wechselwirkung mit dem Bacteriorhodopsin/Purpurmembran-System zeigen.

Wenn die Ummantelung ein Polymer umfasst, ist das Polymer der Ummantelung ausgewählt aus folgender Gruppe: Polystyrol, Polyacrylat, Styrol-Acrylat-Copolymer, Polyurethan, Polyvinylalkohol, Polyvinylbutyral, modifizierte Stärke, modifizierte Zellulose, respektive Copolymere, Mischungen und/oder quer vernetzte respektive vernetzbare Formen davon. Es kann sich dabei zum Beispiel um unter Lichteinfluss und/oder Wärmeeinfluss oder katalytisch vernetzbare Polymere handeln.

Eine weitere bevorzugte Ausführungsform zeichnet sich dadurch aus, dass im zweiten Schritt die Ummantelung unter Zuhilfenahme einer Sprühverkapselung, bevorzugt mittels 3-Stoff-Düse oder mittels Sprüherstarrung, oder unter Zuhilfenahme einer Suspensionspolymerisation erzeugt wird.

Zudem betrifft die vorliegende Erfindung eine optisch schaltbar Bacteriorhodopsin enthaltende Mikrokapsel mit einem Durchmesser von weniger als 10 µm mit einer Umhüllungsschicht, welche das Bacteriorhodopsin vor schädigenden Umwelteinflüssen unter gleichzeitigem Funktionserhalt schützt. Dabei ist das Bacteriorhodopsin in Form von PM/BR-Patches in einem wässrigen Medium bei einem pH-Wert im Bereich von 6-9 in Anwesenheit eines Wasser zurückhaltenden Polymers eingebettet und diese innere Kapsel ist mit einer für Licht im sichtbaren Bereich im wesentlichen vollständig durchlässigen Ummantelung aus einem Polymer und/oder langkettigen gesättigten Kohlenwasserstoff und/oder einer langkettigen gesättigten Fettsäure, bevorzugt einem Paraffin mit einem Erstarrungspunkt von im Bereich von 45 °C-65 °C und/oder einem Carnaubawachs mit einem Schmelzbereich von 70-90 °C, versehen.

Eine solche Mikrokapsel ist vorzugsweise hergestellt respektive herstellbar ist nach einem Verfahren, wie es oben beschrieben worden ist.

Bevorzugtermassen ist ein solches Verfahren dadurch gekennzeichnet, dass das Bacteriorhodopsin in der Kapsel bei einem pH im Bereich von 8-8.5 vorliegt und durch den außerhalb der Ummantelung vorhandenen pH-Wert im wesentlichen vollständig unbeeinflusst ist.

Das Bacteriorhodopsin liegt vorzugsweise in der Kapsel in einem Puffersystem vor, vorzugsweise ausgewählt aus der folgenden Gruppe: Phosphatpuffer, TRIS/HCl, Ammoniakpuffer, Kohlensäure/Hydrogencarbonat, HEPES, HEPBS, AMPD, vorzugsweise in einer Konzentration von weniger als 0.03M, insbesondere bevorzugt in einer Konzentration von weniger als 0.02M.

Das Bacteriorhodopsin liegt in der Kapsel in Anwesenheit eines Feuchthaltemittels vor (gegebenenfalls in Kombination mit weiteren Hilfsstoffen wie beispielsweise Bioziden oder ähnliches), wobei es sich dabei vorzugsweise um eine Mischung aus einem Kaliumsalz wie z.B. Pottasche mit einem Zucker-basierten (auch Zuckeralkohol; siehe weiter oben) Feuchthaltemittel handelt, insbesondere vorzugsweise um eine Mischung aus Pottasche mit Xylit und/oder Sorbit, ganz besonders bevorzugt im Verhältnis 1:2-2:1.

Eine weitere bevorzugte Ausführungsformen der Mikrokapsel ist dadurch gekennzeichnet, dass das Bacteriorhodopsin in Form von PM/BR-Patches im Wasser zurückhaltenden Polymer in einem Anteil von wenigstens 20 Gewichtsprozent vorliegt, wobei es sich vorzugsweise beim wasserzurückhaltenden Polymer um ein System ausgewählt aus folgender Gruppe handelt: Gelatine, Polyethylenglykol, Acrylsäure-Natriumacrylat-Copolymer, Polyvinylpyrrolidon, Polyvinylalkohol, Polysaccariden, Gummiarabicum, derivatisierte Zellulose, Glycogen, Stärke, derivatisiertes Chitin, Xanthan, Zuckeralkohole, Pektine, Guar, Johannisbrotkernmehl, Carrageen, Superabsorber, Zeolithe sowie Kombinationen respektive Mischungen von solchen wasserzurückhaltenden Polymeren.

Wenn die Ummantelung ein Polymer umfasst, ist das Polymer der Ummantelung wiederum ausgewählt aus folgender Gruppe: Polystyrol, Polyacrylat, Styrol-Acrylat-Copolymer, Polyurethan, Polyvinylalkohol, Polyvinylbutyral, modifizierte Stärke, modifizierte Zellulose, respektive Copolymere, Mischungen und/oder quer vernetzte respektive vernetzbare Formen davon.

Des weiteren betrifft die vorliegende Erfindung die von derartigen Mikrokapseln als Pigment für eine Farbe, für eine Beschichtung, für eine Streichformulierung, für einen Füllstoff, für eine Kleberschicht, für ein Hologramm, für eine Inkjet Tinte, für eine Offsetfarbe, für eine Tiefdruckfarbe, für Leiterplatten, insbesondere bevorzugt als Pigment für eine Sicherheitsfarbe.

Mögliche Anwendungen sind entsprechend mehrschichtige Aufbauten mit solchen Mikrokapseln, Kleber respektive Leime mit solchen Mikrokapseln, Heißkleber sowie auch Kaltkleber, Beschichtungen für Papier, Kunststoff und andere Substrate, zum Beispiel als Streichformulierungen zusammen mit Pigmenten und Bindemitteln, Lacke, als Füllstoffe, als Giessmittel, als Bestandteil eines Nassfestmittels, für Kapseln, Pillen, Pulver, Tabletten, Zäpfchen, für biometrische Anwendungen wie beispielsweise Ausweise, Identifikationsdokumente und Sicherheitsdokumente, Sicherheitsfolien, Etiketten, Siegelfolien, Transferfolien, Voucher, Karten, Sicherheitsfäden, Overlays, Sicherheitsfasern, Hologramme, Banknotenbestandteil, Fotographien, Verpackungen und Verpackungsbestandteile, Datenspeicher-Anwendungen.

Zudem betrifft die vorliegende Erfindung eine Sicherheitsfarbe mit derartigen Mikrokapseln. Eine solche Sicherheitsfarbe kann beispielsweise im Siebdruckverfahren, in Inkjet Verfahren, in Tiefdruckverfahren, in Flachdruckverfahren (z.B. Offsetdruck), in Hochdruckverfahren (z.B. Flexo-Druck), in Sprühverfahren, in Dispensern oder im Offsetverfahren Anwendung finden.

Eine solche Sicherheitsfarbe kann in unterschiedlichen Trocknungsverfahren ausgehärtet werden: konventionell durch Lösemittelverdampfung, durch UV-Trocknung (radikalisch oder kationisch), durch chemische Reaktion, durch Heat-Set, durch IR-Trocknung oder durch Kombinationen aus diesen Verfahren.

Weitere Ausführungsbeispiele sind in den abhängigen Ansprüchen beschrieben.

### BESCHREIBUNG BEVORZUGTER AUSFÜHRUNGSFORMEN

Unter Zuhilfenahme einer detaillierten Beschreibung von Ausführungsbeispielen soll die Erfindung, das heißt die Mikroverkapselung PM/BR unter gleichzeitigem Funktionserhalt, anfolgend erläutert werden. Die nun folgenden Erläuterungen sollen nicht zur Einschränkung des Erfindungsgegenstandes, wie er weiter oben in allgemeiner Form sowie in den Patentansprüchen formuliert ist, hinzugezogen werden.

### Herstellung des schaltenden Pulvers:

Das schaltende Pulver wird ausgehend von einer Sprühlösung unter Zuhilfenahme eines Sprühtrockners hergestellt:

### Herstellung der Sprühlösung:

In einem ersten Schritt wird ein Puffer hergestellt, indem in 500 g deionisiertem Wasser 60g KH₂PO₄ (fest) unter Rühren aufgelöst werden. Anschließend wird der pH unter Rühren bei Raumtemperatur durch Zutropfen von KOH (10 Gew% in deionisiertem Wasser) auf pH 8,3 eingestellt.

Die eigentliche Sprühlösung wurde wie folgt angesetzt:
Einwiegen und unter Rühren im Wasserbad (ca. 60°C) auflösen: Gummiarabicum 60 g (FLUKA) [EG# 2325 195]; Maltodextrin 30 g (VWR) [CAS# 9050-36-6]; Phospat-Puffer 25 g (hergestellt wie oben angegeben); Mergal D9N (Troy) 0,2 g; Deionisiertes Wasser 900 g. Unter Rühren auf RT abkühlen lassen. Einwiegen und unter Rühren bei RT auflösen: wässrige Suspension PM/BR 1000 g (ca. 8% Festkörper, ACTILOR); Pottasche 2 g (Roth) [CAS# 584-08-7]; Xylit 2 g (VWR) [CAS# 87-99-0]. Nachstellen pH auf pH=8,3 (±0,2) bei Raumtemperatur.

### Sprühen des "schaltenden Pulvers":

Sprühbedingungen: Labor-Sprühtrockner B-290 (BÜCHI), 2-Stoff-Düse; Inlet-Temperatur der Saugluft: 140°C; Outlet-Temperatur (nach Sprühzylinder): 79°C (± 2°C); Aspirator-Leistung: 95%; Förderleistung Peristaltik-Pumpe: 25% - 30% (ISMATEC Peristaltik-Pumpe, Zweikopfpumpe, Kriterium: optimales Sprühbild); Rotameter Sprühluft: 55 SKT.

Unter den oben beschriebenen Sprüh-Bedingungen wurden rund 0,5 Liter PM/BR-Suspension pro Stunde versprüht. Es wird ein violettes Pulver erhalten, welches bei Beleuchtung mit weißem Licht (Sonnenlicht, Halogen-Lampe oder Weißlicht-LED) reversibel nach beige schaltet. Der Farbwechsel ist nach ca. 20 Sekunden ohne Beleuchtung wieder zum Violett zurückgeschaltet.
Das so erhaltene Produkt wird im folgenden "schaltendes Pulver" genannt. Es besteht bereits aus Kapseln, allerdings sind die Kapsel-Wände noch nicht vollständig inert. Sie sind in reinem Wasser wieder auflösbar.

Das schaltende Pulver kann bei Raumtemperatur über Monate gelagert werden, ohne Abbauerscheinungen zu zeigen.

Das schaltende Pulver kann unter Zuhilfenahme von unterschiedlichen Verfahren zu im Sinne der Erfindung eingekapselten Partikeln verarbeitet werden. Drei mögliche Verfahren sollen in der Folge vorgestellt werden, einerseits die Sprühverkapselung mittels 3-Stoff-Düse (A), die Sprühverkapselung mittels Sprüherstarrung (B), und eine Suspensionspolymerisation (C).

### A: Sprühverkapselung mittels 3-Stoff-Düse

Suspension: Ausgangsmaterial für die Suspension ist das schaltende Pulver, hergestellt wie oben beschrieben. Es wird zu einer Suspension in folgendem Verfahren aufgeschlämmt: zu 100 g deionisiertem Wasser werden 2.7 g K₃PO₄ •3H₂O (fest, Roth) [CAS# 7778-53-2]) zugegeben und unter rühren aufgelöst, anschließend wird bei Raumtemperatur der pH mit KOH(aq) auf 8,3 eingestellt. Anschließend werden 4 g Maltodextrin 4,0 g (VWR, [CAS# 9050-36-6]) zugegeben und gerührt bis eine klare Lösung erhalten wird. Dann werden 4 g schaltendes Pulver erst kurz vor dem eigentlichen Versprühen der Lösung zugefügt und suspendiert. Die Lösung wird während des Versprühens langsam weiter gerührt.

Dispersion für Hülle: Ausgangsmaterial für die Hülle ist ein Styrol-Acrylat Copolymer als Dispersion in Wasser. Spezifisch wird dabei das System Joncryl 77 eingesetzt (Johnson Polymer; Festkörper-Gehalt: 46,2%). Dabei werden 4 g Joncryl 77 in 80 g deionisiertes Wasser eingetragen und gerührt.

Die Acrylat-Dispersion Joncryl 77 kann auch gegen andere klebende Dispersionen (Acrylat, Polyurethan, Polyvinylalkohol, Polyvinylbutyral, modifizierte Stärke, modifizierte Zellulose, etc.) ausgetauscht werden. Dabei ist es wichtig, dass der pH der Hüll-Dispersion im leicht alkalischen liegt, damit Verträglichkeit mit dem System PM/BR gegeben ist und der sich bildende Film hinreichend widerstandsfähig ist gegenüber denaturierenden Molekülen wie Ethanol, Isopropylalkohol, Methanol, Aceton oder Tensiden.

Sprühbedingungen für die Sprühverkapselung: bei einem Labor-Sprühtrockner B-290 (BÜCHI) mit eingesetzter 3-Stoff-Düse wird mit einer Inlet-Temperatur der Saugluft von circa 140°C gearbeitet und mit einer Outlet-Temperatur (nach Sprühzylinder) von circa 60°C (± 2°C). Die Aspirator-Leistung wird auf circa 95% eingestellt, die Förderleistung der eingesetzten ISMATEC Peristaltik-Pumpe wird auf 8,0 eingestellt. Rotameter Sprühluft: 50 SKT.

Es wird ein violettes Pulver erhalten, welches bei Beleuchtung mit weißem Licht (Sonnenlicht, Halogen oder LED) den BR-typischen Farbwechsel zeigt.

Dieses optische Verhalten des erhaltenen Pulvers bleibt langfristig bestehen, auch wenn das Pulver in wässriger Lösung aufgeschlämmt wird, bei einem pH im sauren Bereich (unterhalb von pH 7) gelagert wird oder in einem stark basischen Bereich (oberhalb von pH = 9). Das heißt die lokale Umgebung in der Kapsel bei pH 8,3, in welcher das System PM/BR gelagert ist, wird durch die saure oder stark basische Umgebung außerhalb der Ummantelung nicht beeinflusst. Das optische System ist also von schädigenden Umwelteinflüssen unter gleichzeitigem Funktionserhalt eingekapselt. Des weiteren zeigt es sich nämlich, dass auch die Zugabe von an sich das System PM/BR denaturierenden Substanzen wie beispielsweise Ethanol, Isopropylalkohol, Methanol, Aceton oder Tensiden die so verkapselten Systeme in ihrer optischen Funktion nicht beeinträchtigen können.

### B: Sprühverkapselung mittels Sprüherstarrung:

Der Laborsprühtrockner B-290 (BÜCHI) erlaubt auch die Sprüherstarrung. Dazu wird das Gerät umgerüstet. Bei der Sprüherstarrung ist nur ein Betrieb mit 2-Stoff-Düse möglich. Zur Sprüherstarrung wird schaltendes Pulver wie oben beschrieben verwendet:
Suspension: Ausgangsmaterial für die Suspension ist das schaltende Pulver hergestellt wie oben beschrieben. Es wird zu einer Suspension in folgendem Verfahren aufgeschlämmt: zu 100 g deionisiertem Wasser werden 2.7 g K₃PO₄ • 3H₂O (fest, K₃PO₄ • 3H₂O (Roth) [CAS# 7778-53-2]) zugegeben und unter rühren aufgelöst, anschließend wird bei Raumtemperatur der pH mit KOH(aq) auf 8,3 eingestellt. Anschließend werden 4 g Maltodextrin 4,0 g (VWR, [CAS# 9050-36-6]) zugegeben und gerührt bis eine klare Lösung erhalten wird. Dann werden 4 g schaltendes Pulver erst kurz vor dem eigentlichen Versprühen der Lösung zugefügt und suspendiert. Die Lösung wird während des Versprühens langsam weiter gerührt.

Doppelemulsion: Die so erhaltene Suspension (ca. 50%ig an schaltendem Pulver) wird in geschmolzenem Paraffin (Schmelzbereich 60°C bis 65° C) oder alternativ in geschmolzenem Carnaubawachs (Schmelzbereich 80°C bi s 87°C) unter Rühren suspendiert.

Sprühbedingungen für die Sprüherstarrung: bei einem Labor-Sprühtrockner B-290 (BÜCHI) wird mit einer Inlet-Temperatur (Saugluft) von Raumtemperatur und einer Outlet-Temperatur (nach Sprühzylinder) ebenfalls von Raumtemperatur gearbeitet. Die Aspirator-Leistung wird auf 95% eingestellt.

Es wird auch hier ein violettes Pulver erhalten, welches bei Beleuchtung mit weißem Licht (Sonnenlicht, Halogen oder LED) den BR-typischen Farbwechsel zeigt.

Dieses optische Verhalten des erhaltenen Pulvers bleibt wiederum langfristig bestehen, auch wenn das Pulver in wässriger Lösung aufgeschlämmt wird, bei einem pH im sauren Bereich (unterhalb von pH 7) gelagert wird oder in einem stark basischen Bereich (oberhalb von pH = 9). Das heißt die lokale Umgebung in der Kapsel bei pH 8,3, in welcher das System PM/BR gelagert ist, wird durch die saure oder stark basische Umgebung außerhalb der Ummantelung nicht beeinflusst. Auch die Zugabe von an sich das ungeschützte System PM/BR denaturierenden Substanzen wie beispielsweise Ethanol, Isopropylalkohol, Methanol, Aceton oder Tensiden die so verkapselten Systeme in ihrer optischen Funktion nicht beeinträchtigen können. Das optische System ist also auch bei diesem Ausführungsbeispiel von schädigenden Umwelteinflüssen unter gleichzeitigem Funktionserhalt eingekapselt.

### C: Suspensionspolymerisation

Eine Suspension von schaltendem Pulver in wässriger Lösung wird wie folgt hergestellt: Ausgangsmaterial für die Suspension ist das schaltende Pulver hergestellt wie oben beschrieben. Es wird zu einer Suspension in folgendem Verfahren aufgeschlämmt: zu 100 g deionisiertem Wasser werden 2.7 g K₃PO₄ • 3H₂O (fest, K₃PO₄ • 3H₂O (Roth) [CAS# 7778-53-2]) zugegeben und unter rühren aufgelöst, anschließend wird bei Raumtemperatur der pH mit KOH(aq) auf 8,3 eingestellt. Anschließend werden 4 g Maltodextrin 4,0 g (VWR, [CAS# 9050-36-6]) zugegeben und gerührt bis eine klare Lösung erhalten wird. Dann werden 4 g schaltendes Pulver erst kurz vor dem eigentlichen Auslösen der Polymerisation zugefügt und suspendiert. Die so hergestellte Suspension wird in einem trockenen aliphatischen

Lösemittel (Cyclohexan oder Petroether) suspendiert. Zum Anpassen der Oberflächenspannung wird falls erforderlich ein Tensid zugegeben.

Die Trocknung des Lösemittels gelingt durch Einstreuen von Molekularsiebperlen oder durch Einpressen von Natrium-Draht. Das Arbeiten sollte unter scharf getrockneter Luft oder unter trockenem Stickstoff erfolgen.

Zu dieser Doppelemulsion wird unter Rühren Cyanmethacrylat oder Cyanacrylat (erhältlich z.B. unter dem Namen Hernon Quantum von Ellsworth Adhesives, US) getröpft. Die Rührgeschwindigkeit wird dabei so gewählt, dass die Größe der suspendierten Partikel kleiner 10µm ist. Es bilden sich um die suspendierten Partikel aus schaltendem Pulver mit Hüllen aus Poly-Cyanmethacrylat oder Poly-Cyanacrylat. Es wird auch hier ein violettes Pulver erhalten, welches bei Beleuchtung mit weißem Licht (Sonnenlicht, Halogen oder LED) den BR-typischen Farbwechsel zeigt.

Dieses optische Verhalten des erhaltenen Pulvers bleibt wiederum langfristig bestehen, auch wenn das Pulver in wässriger Lösung aufgeschlämmt wird, bei einem pH im sauren Bereich (unterhalb von pH 7) gelagert wird oder in einem stark basischen Bereich (oberhalb von pH = 9). Das heißt die lokale Umgebung in der Kapsel bei pH 8,3, in welcher das System PM/BR gelagert ist, wird durch die saure oder stark basische Umgebung außerhalb der Ummantelung nicht beeinflusst. Auch die Zugabe von an sich das ungeschützte System PM/BR denaturierenden Substanzen wie beispielsweise Ethanol, Isopropylalkohol, Methanol, Aceton oder Tensiden die so verkapselten Systeme in ihrer optischen Funktion nicht beeinträchtigen können. Das optische System ist also auch bei diesem Ausführungsbeispiel von schädigenden Umwelteinflüssen unter gleichzeitigem Funktionserhalt eingekapselt.

## Patentansprüche

1. Verfahren zur Herstellung von optisch schaltbar Bacteriorhodopsin enthaltenden Mikrokapseln mit einem Durchmesser von weniger als 50 µm, bevorzugt weniger als 10 µm mit einer Umhüllungsschicht, welche das Bacteriorhodopsin vor schädigenden Umwelteinflüssen unter gleichzeitigem Funktionserhalt schützt,
wobei in einem ersten Schritt Bacteriorhodopsin in Form von Bacteriorhodopsin/Purpurmembran-Patches in einem wässrigen Medium bei einem pH-Wert im Bereich von 6-9 in Anwesenheit eines Wasser zurückhaltenden Polymers suspendiert wird und diese Suspension zu einem Pulver sprühgetrocknet wird oder in einem aliphatischen Lösungsmittel mit niedrigem Dampfdruck und anfolgendem Wasserentzug zu einem Pulver getrocknet wird,
und in einem zweiten Schritt das so erhaltene Pulver mit einer für Licht im sichtbaren Bereich im Wesentlichen vollständig durchlässigen Ummantelung versehen wird, die
aus einem Polymer ausgewählt aus der Gruppe bestehend aus Polystyrol, Polyacrylat, Styrol-Acrylat-Copolymer, Polyurethan, Polyvinylalkohol, Polyvinylbutyral, modifizierte Stärke, modifizierte Zellulose, respektive Copolymere, Mischungen und/oder quer vernetzte respektive vernetzbare Formen davon und/oder
aus einem langkettigen gesättigten Kohlenwasserstoff und/oder
aus einer langkettigen gesättigten Fettsäure
besteht und in der Mikrokapsel einen definierten, von der Umgebung der Mikrokapsel im Wesentlichen unbeeinflussten pH-Wert sicherstellt.

2. Verfahren nach Anspruch 1, **dadurch gekennzeichnet, dass** im ersten Schritt der pH unter Verwendung eines Puffersystems im Bereich 7.5-9, vorzugsweise im Bereich von 8-8.5, eingestellt wird, wobei es sich vorzugsweise beim Puffersystem um ein System ausgewählt aus der folgenden Gruppe: Phosphatpuffer, TRIS/HCl, Ammoniakpuffer, Kohlensäure/Hydrogencarbonat-System, Diglycin, Bicin, HEPPS, HEPES, HEPBS, TAPS, AMPD oder eine Kombination solcher Systeme handelt, vorzugsweise in einer Konzentration von weniger als 0.03M, insbesondere bevorzugt in einer Konzentration von weniger als 0.02M.

3. Verfahren nach einem der vorhergehenden Ansprüche, **dadurch gekennzeichnet, dass** im ersten Schritt in der Suspension als Hilfsstoff wenigstens ein Feuchthaltemittel enthalten ist, wobei es sich dabei vorzugsweise um eine Mischung aus einem Kalium-Salz, bevorzugt Pottasche, mit einem Zuckerrespektive Zuckeralkohol-basierten Feuchthaltemittel handelt, insbesondere vorzugsweise um eine Mischung aus Pottasche mit Xylit und/oder Sorbit, ganz besonders bevorzugt im Verhältnis 1:2-2:1.

4. Verfahren nach einem der vorhergehenden Ansprüche, **dadurch gekennzeichnet, dass** im ersten Schritt in der Suspension der Gesamtanteil an Bacteriorhodopsin/Purpurmembran, Puffer und Hilfsstoff weniger als 3 Gewichtsprozent ausmacht.

5. Verfahren nach einem der vorhergehenden Ansprüche, **dadurch gekennzeichnet, dass** Bacteriorhodopsin in Form von PM/BR-Patches im Wasser zurückhaltenden Polymer in einem Anteil von wenigstens 20 Gewichtsprozent vorliegt, wobei es sich vorzugsweise beim wasserzurückhaltenden Polymer um ein System ausgewählt aus folgender Gruppe handelt: Gelatine, Polyethylenglykol, Acrylsäure-Natriumacrylat-Copolymer, Polyvinylpyrrolidon, Polyvinylalkohol, Polysaccariden, Gummiarabicum, derivatisierte Zellulose, Glycogen, Stärke, derivatisiertes Chitin, Xanthan, Zuckeralkohole, Pektine, Guar, Johannisbrotkernmehl, Carrageen, Superabsorber , Zeolithe sowie Kombinationen respektive Mischungen von solchen wasserzurückhaltenden Polymeren.

6. Verfahren nach einem der vorhergehenden Ansprüche, **dadurch gekennzeichnet, dass** im zweiten Schritt die Ummantelung unter Zuhilfenahme einer Sprühverkapselung, bevorzugt mittels 3-Stoff-Düse oder mittels Sprüherstarrung, oder unter Zuhilfenahme einer Suspensionspolymerisation erzeugt wird.

7. Optisch schaltbar Bacteriorhodopsin enthaltende Mikrokapsel mit einem Durchmesser von weniger als 50 µm, bevorzugt weniger als 10 µm mit einer Umhüllungsschicht, welche das Bacteriorhodopsin vor schädigenden Umwelteinflüssen unter gleichzeitigem Funktionserhalt schützt, wobei das Bacteriorhodopsin in Form von PM/BR-Patches in einem wässrigen Medium bei einem pH-Wert im Bereich von 6-9 in Anwesenheit eines Wasser zurückhaltenden Polymers eingebettet ist und diese innere Kapsel mit einer für Licht im sichtbaren Bereich im Wesentlichen vollständig durchlässigen Ummantelung versehen ist, die
aus einem Polymer ausgewählt aus der Gruppe bestehend aus Polystyrol, Polyacrylat, Styrol-Acrylat-Copolymer, Polyurethan, Polyvinylalkohol, Polyvinylbutyral, modifizierte Stärke, modifizierte Zellulose, und Copolymere, Mischungen und/oder quer vernetzte respektive vernetzbare Formen davon und/oder
aus einem langkettigen gesättigten Kohlenwasserstoff und/oder
aus einer langkettigen gesättigten Fettsäure
besteht und in der Mikrokapsel einen definierten, von der Umgebung der Mikrokapsel im Wesentlichen unbeeinflussten pH-Wert sicherstellt.

8. Mikrokapsel nach Anspruch 7, **dadurch gekennzeichnet, dass** die Ummantelung aus einem Paraffin mit einem Erstarrungspunkt von im Bereich von 45 °C-65 °C und/oder einem Carnaubawachs mit einem Schmelzbereich von 70-90 °C besteht.

9. Mikrokapsel nach Anspruch 7 oder 8, **dadurch gekennzeichnet, dass** die Mikrokapsel hergestellt ist respektive herstellbar ist nach einem Verfahren nach einem der Ansprüche 1-6.

10. Mikrokapsel nach einem der Ansprüche 7-9, **dadurch gekennzeichnet, dass** das Bacteriorhodopsin in der Kapsel bei einem pH im Bereich von 8-8.5 vorliegt und durch den außerhalb der Ummantelung vorhandenen pH-Wert im Wesentlichen vollständig unbeeinflusst ist.

11. Mikrokapsel nach einem der Ansprüche 7-10, **dadurch gekennzeichnet, dass** das Bacteriorhodopsin in der Kapsel in einem Puffersystem vorliegt, vorzugsweise ausgewählt aus der folgenden Gruppe: Phosphatpuffer, TRIS/HCl, Ammoniakpuffer, Kohlensäure/Hydrogencarbonat-System, Diglycin, Bicin, HEPPS, HEPES, HEPBS, TAPS, AMPD oder eine Kombination solcher Systeme, vorzugsweise in einer Konzentration von weniger als 0.03M, insbesondere bevorzugt in einer Konzentration von weniger als 0.02M.

12. Mikrokapsel nach einem der Ansprüche 7-11, **dadurch gekennzeichnet, dass** das Bacteriorhodopsin in der Kapsel in Anwesenheit eines Feuchthaltemittels vorliegt, wobei es sich dabei vorzugsweise um eine Mischung aus Kalium-Salz, bevorzugt Pottasche, mit einem Zucker oder Zuckeralkohol-basierten Feuchthaltemittel handelt, insbesondere vorzugsweise um eine Mischung aus Pottasche mit Xylit und/oder Sorbit, ganz besonders bevorzugt im Verhältnis 1:2-2:1.

13. Mikrokapsel nach einem der Ansprüche 7-12, **dadurch gekennzeichnet, dass** das Bacteriorhodopsin in Form von Bacteriorhodopsin/Purpurmembran-Patches im Wasser zurückhaltenden Polymer in einem Anteil von wenigstens 20 Gewichtsprozent vorliegt, wobei es sich vorzugsweise beim wasserzurückhaltenden Polymer um ein System ausgewählt aus folgender Gruppe handelt: Gelatine, Polyethylenglykol, Acrylsäure-Natriumacrylat-Copolymer, Polyvinylpyrrolidon, Polyvinylalkohol, Polysaccariden, Gummiarabicum, derivatisierte Zellulose, Glycogen, Stärke, Zuckeralkoholen, derivatisiertes Chitin, Xanthan, Pektine, Guar, Johannisbrotkernmehl, Carrageen, Superabsorber, Zeolithe sowie Kombinationen respektive Mischungen von solchen wasserzurückhaltenden Polymeren.

14. Verwendung von Mikrokapseln nach einem der Ansprüche 7-13 als Farbkörper oder Pigment für eine Farbe, für eine Beschichtung, für eine Streichformulierung, für einen Füllstoff, für eine Kleberschicht, für ein Hologramm, für eine Inkjet Tinte, für eine Offsetfarbe, für eine Tiefdruckfarbe, für Leiterplatten, insbesondere bevorzugt als Farbkörper oder Pigment für eine Sicherheitsfarbe.

15. Sicherheitsfarbe mit Mikrokapseln nach einem der Ansprüche 7-13.

## Claims

1. A method for producing optically activatable bacteriorhodopsin-containing microcapsules having a diameter of less than 50 µm, preferably less than 10 µm, having an enveloping layer which protects the bacteriorhodopsin from harmful environmental effects while simultaneously retaining functionality thereof,
wherein, in a first step, bacteriorhodopsin is suspended in the form of bacteriorhodopsin/purple membrane patches in an aqueous medium at a pH in the range of 6-9 in the presence of a water-retaining polymer and this suspension is spray dried to form a powder or is dried in an aliphatic solvent with low vapor pressure and subsequent water removal to form a powder,
and in a second step the resultant powder is provided with a sheath that is substantially completely permeable to light in the visible range, the sheath being made of
a polymer selected from the group consisting of polystyrene, polyacrylate, styrene-acrylate copolymer, polyurethane, polyvinyl alcohol, polyvinyl butyral, modified starch, modified cellulose, or copolymers, mixtures and/or crosslinked or crosslinkable forms thereof, and/or
a long-chain saturated hydrocarbon and/or
a long-chain saturated fatty acid,
the sheath ensuring a defined pH in the microcapsule, the pH being essentially unaffected by the environment of the microcapsule.

2. The method as claimed in claim 1, **characterized in that**, in the first step, the pH is set using a buffer system in the range 7.5-9, preferably in the range of 8-8.5, wherein the buffer system is preferably a system selected from the following group: phosphate buffer, TRIS/HCl, ammonia buffer, carbonic acid/hydrogencarbonate system, diglycine, bicine, HEPPS, HEPES, HEPBS, TAPS, AMPD, or a combination of such systems, preferably at a concentration of less than 0.03M, particularly preferably at a concentration of less than 0.02M.

3. The method as claimed in any one of the preceding claims, **characterized in that**, in the first step, at least one moisture retention agent is present in the suspension as auxiliary, wherein, this is preferably a mixture of a potassium salt, preferably potash, with a sugar- or sugar-alcohol-based moisture retention agent, particularly preferably a mixture of potash with xylitol and/or sorbitol, very particularly preferably in the ratio 1:2-2:1.

4. The method as claimed in any one of the preceding claims, **characterized in that**, in the first step, the total fraction of bacteriorhodopsin/purple membrane, buffer and auxiliary in the suspension makes up less than 3 percent by weight.

5. The method as claimed in any one of the preceding claims, **characterized in that** bacteriorhodopsin in the form of PM/BR patches is present in the water-retaining polymer in a fraction of at least 20 percent by weight, wherein the water-retaining polymer is preferably a system selected from the following group: gelatin, polyethylene glycol, acrylic acid-sodium acrylate copolymer, polyvinylpyrrolidone, polyvinyl alcohol, polysaccharides, gum arabic, derivatized cellulose, glycogen, starch, derivatized chitin, xanthan, sugar alcohols, pectins, guar, carob bean meal, carrageenan, superabsorbers, zeolites and combinations or mixtures of such water-retaining polymers.

6. The method as claimed in any one of the preceding claims, **characterized in that**, in the second step, the sheath is generated with the aid of a spray encapsulation, preferably by means of a 3-component nozzle or by means of spray solidification, or with the aid of a suspension polymerization.

7. An optically activatable bacteriorhodopsin-containing microcapsule having a diameter of less than 50 µm, preferably less than 10 µm, and having an envelope layer which protects the bacteriorhodopsin from harmful environmental effects while simultaneously retaining functionality thereof, wherein the bacteriorhodopsin is embedded in the form of PM/BR patches in an aqueous medium at a pH in the range of 6-9 in the presence of a water-retaining polymer and this inner capsule is provided with a sheath that is substantially completely permeable to light in the visible range, the sheath being made of
a polymer and/or
a long-chain saturated hydrocarbon and/or
a long-chain saturated fatty acid,
the sheath ensuring a defined pH in the microcapsule, the pH being essentially unaffected by the environment of the microcapsule.

8. The microcapsule as claimed in claim 7, **characterized in that** the sheath is made of a paraffin having a solidification point in the range of 45°C-65°C and/or a carnauba wax having a melting range of 70-90°C.

9. The microcapsule as claimed in claim 7 or 8, **characterized in that** the microcapsule is produced or producible by a method as claimed in any one of claims 1-6.

10. The microcapsule as claimed in any one of claims 7-9, **characterized in that** the bacteriorhodopsin in the capsule is present at a pH in the range of 8-8.5 and is substantially completely unaffected by the pH present outside the sheath.

11. The microcapsule as claimed in any one of claims 7-10, **characterized in that** the bacteriorhodopsin in the capsule is present in a buffer system preferably selected from the following group: phosphate buffer, TRIS/HCl, ammonia buffer, carbonic acid/hydrogencarbonate system, diglycine, bicine, HEPPS, HEPES, HEPBS, TAPS, AMPD, or a combination of such systems, preferably at a concentration of less than 0.03M, particularly preferably at a concentration of less than 0.02M.

12. The microcapsule as claimed in any one of claims 7-11, **characterized in that** the bacteriorhodopsin in the capsule is in the presence of a moisture-retention agent, wherein it is preferably a mixture of a potassium salt, preferably potash, with a sugar- or sugar-alcohol-based moisture-retention agent, in particular preferably a mixture of potash with xylitol and/or sorbitol, very particularly preferably in the ratio 1:2-2:1.

13. The microcapsule as claimed in any one of claims 7-12, **characterized in that** the bacteriorhodopsin in the form of bacteriorhodopsin/purple membrane patches is present in the water-retaining polymer in a fraction of at least 20 percent by weight, wherein the water-retaining polymer is preferably a system selected from the following group: gelatin, polyethylene glycol, acrylic acid-sodium acrylate copolymer, polyvinylpyrrolidone, polyvinyl alcohol, polysaccharides, gum arabic, derivatized cellulose, glycogen, starch, sugar alcohols, derivatized chitin, xanthan, pectins, guar, carob bean meal, carrageenan, superabsorbers, zeolites and combinations or mixtures of such water-retaining polymers.

14. The use of microcapsules as claimed in any one of claims 7-13 as pigment for a paint, for a coating, for a coating formulation, for a filler, for an adhesive layer, for a hologram, for an inkjet ink, for an offset ink, for a gravure ink, for printed circuit boards, in particular preferably as pigment for a security ink.

15. A security ink having microcapsules as claimed in any one of claims 7-13.

## Revendications

1. Procédé de fabrication de microcapsules optiquement commutables contenant de la bactériorhodopsine ayant un diamètre inférieur à 50 µm, préférablement inférieur à 10 µm, avec une couche d'enrobage, laquelle protège la bactériorhodopsine des influences extérieures nuisibles et en même temps protège la préservation de fonctionnement,
où, dans une première étape, on met en suspension la bactériorhodopsine sous forme de patchs bactériorhodopsine/membrane pourpre dans un milieu aqueux à une valeur de pH dans le domaine de 6 à 9 en présence d'un polymère retenant l'eau et on sèche cette suspension par séchage par atomisation pour obtenir une poudre ou on sèche cette suspension dans un solvant aliphatique ayant une faible pression de vapeur suivi par une déshydratation pour obtenir une poudre,
et, dans une seconde étape, on munit la poudre ainsi obtenue d'un enrobage sensiblement complètement perméable à la lumière dans le domaine visible, qui
est constitué d'un polymère choisi du groupe constitué de polystyrène, polyacrylate, copolymère de styrène-acrylate, polyuréthane, alcool polyvinylique, butyral de polyvinyle, amidon modifié, cellulose modifiée, respectivement des copolymères, mélanges et/ou des formes réticulées ou réticulables de ceux-ci, et/ou
d'une hydrocarbure saturée à chaine longue et/ou
d'un acide gras saturé à chaine longue,
et assure, dans la microcapsule, une valeur de pH sensiblement non influencée par le milieu environnant de la microcapsule.

2. Procédé selon la revendication 1, **caractérisé en ce que** dans la première étape, le pH est réglé en utilisant un système tampon, dans un domaine de 7,5 à 9, préférablement dans un domaine de 8 à 8,5, où préférablement dans le cas du système, il s'agit d'un système choisi du groupe suivant : tampon phosphate, TRIS/HCl, tampon ammoniaque, système acide carbonique / hydrogénocarbonate, diglycine, bicine, HEPPS, HEPES, HEPBS, TAPS, AMPD ou une combinaison d'un tel système, préférablement dans une concentration de moins de 0.03 M, en particulier préférablement dans une concentration de moins de 0.02M.

3. Procédé selon une des revendications précédentes, **caractérisé en ce que**, dans la première étape, un humidifiant est compris dans la suspension en tant que matière auxiliaire, où il s'agit préférablement d'un mélange d'un sel de potassium, préférablement de la potasse, avec un humidifiant à base de sucre, respectivement à base d'alditol, en particulier préférablement d'un mélange de potasse avec xylitol et /ou sorbitol, très particulièrement préférablement dans un rapport de 1:2 à 2:1.

4. Procédé selon une des revendications précédents, **caractérisé en ce que**, dans la première étape, la teneur entière de bactériorhodopsine / membrane pourpre, tampon et matière auxiliaire dans la suspension représente moins de 3 pour cent en poids.

5. Procédé selon une des revendications précédentes, **caractérisé en ce que** la bactériorhodopsine est présente en forme de patchs PM / BR dans le polymère retenant l'eau dans une teneur d'au moins 20 pour cent en poids, où dans le cas du polymère retenant l'eau il s'agit préférablement d'un système choisi du groupe suivant : gélatine, polyéthylène glycol, copolymère d'acide acrylique - acrylate de sodium, polyvinylpyrrolidone, alcool polyvinylique, polysaccharides, gomme arabique, cellulose dérivatisée, glycogène, amidon, chitine dérivatisée, xanthane, alditols, pectine, gomme de guar, gomme de caroube, carraghénane, super-absorbant, zéolithes ainsi que des combinaisons respectivement mélanges de tels polymères retenant l'eau.

6. Procédé selon l'une des revendications précédentes, **caractérisé en ce que**, dans la deuxième étape, l'enrobage est produit à l'aide d'encapsulation par atomisation, préférablement au moyen de buse à trois matières ou au moyen de solidification par atomisation, ou à l'aide de polymérisation en suspension.

7. Microcapsule optiquement commutable contenant de la bactériorhodopsine ayant un diamètre inférieur à 50 µm, préférablement inférieur à 10 µm, avec une couche d'enrobage, laquelle protège la bactériorhodopsine des influences extérieures nuisibles tout en même temps protégeant la préservation du fonctionnement, où la bactériorhodopsine est incorporé sous forme de patchs PM / BR dans un milieu aqueux, à une valeur de pH dans le domaine de 6 à 9, en présence d'un polymère retenant l'eau et cette capsule intérieure est munie d'un enrobage sensiblement complètement perméable à la lumière dans le domaine visible, qui est
constitué d'un polymère choisi du groupe constitué de polystyrène, polyacrylate, polymère de styrène acrylate, polyuréthane, alcool polyvinylique, butyrale de polyvinyle, amidon modifié, cellulose modifiée, et de copolymères, mélanges et/ou formes réticulées ou réticulables de ceux-ci et/ou
d'une hydrocarbure saturée à chaine longue et/ou
d'un acide gras saturé à chaine longue,
et assure, dans la microcapsule, une valeur de pH sensiblement non influencée par le milieu environnant de la microcapsule.

8. Microcapsule selon la revendication 7, **caractérisée en ce que** l'enrobage est constitué d'une paraffine ayant un point de solidification dans un domaine de 45° C à 65° C et/ou d'une cire de carnauba avec un domaine de fusion de 70 à 90° C.

9. Microcapsule selon la revendication 7 ou 8, **caractérisée en ce que** la microcapsule est produite, respectivement peut être produite, selon un procédé selon une des revendications 1 à 6.

10. Microcapsule selon une des revendications 7 à 9, **caractérisée en ce que** la bactériorhodopsine est présente dans la capsule à un pH dans le domaine de 8 à 8,5 et n'est sensiblement complètement pas influencée par le pH présent à l'extérieur de l'enrobage.

11. Microcapsule selon une des revendications 7 à 10, **caractérisée en ce que** la bactériorhodopsine est présente dans la capsule dans un système tampon, préférablement choisi du groupe suivant : tampon phosphate, TRIS/HCl, tampon ammoniaque, système acide carbonique / hydrogénocarbonate, diglycine, bicine, HEPPS, HEPES, HEPBS, TAPS, AMPD ou une combinaison de ces systèmes, préférablement dans une concentration de moins de 0.03M, en particulier préférablement dans une concentration de moins de 0.02M.

12. Microcapsule selon une des revendications 7 à 11, **caractérisée en ce que** la bactériorhodopsine est présente dans la capsule en présence d'un humidifiant, où il s'agit préférablement d'un mélange de sel de potassium, préférablement de la potasse, avec un humidifiant à base de sucre, ou à base d'alditol, en particulier préférablement d'un mélange de potasse avec xylitol et /ou sorbitol, très particulièrement préférablement dans un rapport de 1:2 à 2:1.

13. Microcapsule selon une des revendications 7 à 12, **caractérisée en ce que** la bactériorhodopsine est présente en forme de patchs de bactériorhodopsine / membrane pourpre dans le polymère retenant l'eau dans une teneur d'au moins 20 pour cent en masse, où dans le cas du polymère retenant l'eau, il s'agit préférablement d'un système choisi du groupe suivant : gélatine, polyéthylène glycol, copolymère d'acide acrylique - acrylate de sodium, polyvinylpyrrolidone, alcool polyvinylique, polysaccharides, gomme arabique, cellulose dérivatisée, glycogène, amidon, alditols, chitine dérivatisée, xanthane, pectine, gomme de guar, gomme de caroube, carraghénane, super-absorbant, zéolithes ainsi que des combinaisons respectivement mélanges de tels polymères retenant l'eau.

14. Utilisation de microcapsules selon une des revendications 7 à 13 comme corps de couleur ou pigment pour une couleur, un revêtement, une formulation à peinture, pour une charge, pour une couche d'adhésif, pour un hologramme, pour une ancre à jet d'encre, pour une couleur offset, pour un encre d'héliogravure, pour cartes à circuits, en particulier préférablement comme corps de couleur ou pigment pour une encre de sécurité.

15. Encre de sécurité ayant des microcapsules selon une des revendications 7 à 13.
